(19) Europäisches Patentamt
European Patent Office
Office européen des brevets

(11) **EP 3 486 865 A1**

(12) **EUROPEAN PATENT APPLICATION**

(43) Date of publication:
**22.05.2019 Bulletin 2019/21**

(51) Int Cl.:
***G06T 5/00*** (2006.01)

(21) Application number: **17306603.6**

(22) Date of filing: **20.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **THOMSON LICENSING**
**92130 Issy les Moulineaux (FR)**

(72) Inventors:
• **POULI, Tania**
**35576 CESSON-SÉVIGNÉ (FR)**

• **KERVEC, Jonathan**
**35576 CESSON-SÉVIGNÉ (FR)**
• **MORVAN, Patrick**
**35576 CESSON-SÉVIGNÉ (FR)**
• **GUERMOUD, Hassane**
**35576 CESSON-SÉVIGNÉ (FR)**

(74) Representative: **Browaeys, Jean-Philippe et al**
**InterDigital CE Patent Holdings**
**20, rue Rouget de Lisle**
**92130 Issy-les-Moulineaux (FR)**

(54) **METHOD AND DEVICE FOR INVERSE TONE MAPPING**

(57)    A method for processing a current view $v_t$ extracted from a current Virtual Reality (VR) image $I_t$ following at least one previous view $v_{t-1}$, comprising tone mapping (S7) the current view $v_t$ into a processed current view $v'_t$ at a level which is a non-decreasing function of a luminance difference $\delta L_t$ between said current view $v_t$ and said at least one previous view $v_{t-1}$.

Thank to this processing of consecutive views, blinding and eye strain of viewer's eyes are avoided.

**S1** : Receiving VR image

**S2** : Orientation of viewer's head

Previous view

Current view

**S3** : Luminance Evaluation

**S4** : Luminance Evaluation

**S5** : Luminance Difference

**S6** : Computing tone-mapping parameter

**S7** : Tone-mapping

Tone-mapped Previous view

Tone-mapped Current view

**S8** : Display

**FIG.1**

EP 3 486 865 A1

**Description**

**1. Technical Field**

The present invention relates generally to the field of tone mapping adaptation.

**2. Background Art**

Over the past years, High Dynamic Range (or HDR) displays have become more and more popular. They offer a new user experience as they can show images and videos with high brightness (until 4000 nits) compared to standard or Standard Dynamic Range (or SDR) displays (150-400 nits). HDR devices are able to display videos with more details in black levels and with a higher global contrast. Head-mounted display (or HMD) of high brightness are now also used to display video content with large temporal and/spatial brightness variations.

Today, in the context of virtual reality (or VR), existing head-mounted display devices reach up to 200 cd/m$^2$, offering a peak luminance of more than 4 times larger than usual cinema, despite the lack of ambient lighting, which may cause visual discomfort over prolonged viewing.

In the context of VR display, a viewer wearing a HMD is positioned within a VR scene at the center of a 360° environment, within which he can freely rotate and move to look at a selected portion of this VR scene, i.e. a specific view of this VR scene. It has been commonly noticed that HMD viewers can be blinded by views presenting high peak of brightness. More specifically, transitions from a dark view to a bright view generate flash that cause eye strain for the viewers. Such eye strain transitions may happen when transitioning from a dark view of a VR image to a bright view of the same or subsequent VR image. Such a transition may happen due to a change of VR image or due to a change of selected view generated by a movement of the viewer's head. The eye discomfort is much higher as the frequency of alternating dark to bright views is higher.

Although for at least some HMDs the displayed brightness could be controlled by the viewer and set to a more comfortable level, this is not an ideal solution, since the "wow effect" that could be achieved with the higher brightness of such HMD with Higher Dynamic Range capabilities is lost.

**3. Summary of Invention**

In order to avoid blinding the viewer without losing the "wow effect", it is proposed to tone map each current view at a level which is a non-decreasing function of a luminance difference between this current view and a previous one. Thanks to this tone-mapping, large, abrupt changes in brightness are avoided or reduced in strength, while peak brightness is preserved, at least after these abrupt changes.

According to the below method, the luminance of each current view is tone mapped as the viewer's head moves, depending on the luminance of previous view(s) and optionally on the movement speed of the viewer within the VR scene. To achieve that, the method proposes: first determining how luminance changes between consecutive views and then computing a luminance compression or optionally, expansion, factor for processing the luminance distribution of the current view.

A subject of the invention is a method for processing a current view $v_t$ extracted from a current Virtual Reality (VR) image $I_t$ following at least one previous view $v_{t-1}$ extracted from the same current VR image $I_t$ or from a previous VR image $I_{t-1}$, comprising tone mapping the current view $v_t$ into a processed current view $v'_t$ at a level which is a non-decreasing function of a luminance difference $\delta L_t$ between said current view $v_t$ and said at least one previous view $v_{t-1}$, wherein said tone mapping may be a compression or an expansion of luminance.

Thank to this processing of consecutive views, blinding and eye strain of viewer's eyes are avoided without losing the "wow" effect that can be obtained by a HDR HMD.

Preferably:

If said luminance difference $\delta L_t > 0$, said tone mapping is performed such that said processed current view $v'_t$ has a luminance evaluation $L'_t$ inferior to the luminance evaluation $L_t$ of said current view $v_t$; If said luminance difference $\delta L_t \leq 0$, said tone mapping is performed such that said processed current view $v'_t$ is equal to said current view $v_t$.

Preferably, in this method, each of luminance evaluations is computed for its view as an average of luminance values of colors of pixels of this view. Preferably, luminance values used for computing each average for a view does not include a given percentile of pixels of the view having the highest luminance values. Preferably, this given percentile is above zero but inferior or equal to 5%.

Preferably, the tone mapping is performed by applying to luminance values $Y_t$ of pixels of the current view $v_t$ a tone mapping function $f(Y_t, c_t)$ parametrized with a tone mapping parameter $c_t$, which is a non-decreasing function of

the luminance value $Y_t$ and of the tone mapping parameter $c_t$, wherein said tone mapping parameter $c_t$ is a non-decreasing function of said luminance difference $\delta L_t$.

Preferably, this non-decreasing tone mapping function is a monotonically increasing function, having then a first derivative over luminance value $Y_t$ and over said tone mapping parameter $c_t$ which is continuous and positive or null over its range.

Preferably, this non-decreasing tone mapping parameter function is a monotonically increasing function, having then a first derivative over the luminance difference $\delta L_t$ which is continuous and positive or null over its range.

Preferably, the method further comprises computing the luminance difference $\delta L_t$ from a difference between a luminance evaluation $L_t$ of the current view $v_t$ and a luminance evaluation (s) $L'_{t-1}$ of a processed version (s) $v'_{t-1}$ of the at least one previous view $v_{t-1}$, wherein each processed version $v'_{t-1}$ of a previous view $v_{t-1}$ is obtained by applying said tone mapping function $f(Y_{t-1}, c_{t-1})$ to luminance values $Y_{t-1}$ of pixels of this previous view $v_{t-1}$, and wherein each of luminance evaluations is computed for its view as an average of luminance values of colors of pixels of this view. Preferably, luminance values used for computing each average for a view does not include a given percentile of pixels of the view having the highest luminance values. Preferably, this given percentile is above zero but inferior or equal to 5%.

Preferably, the tone mapping parameter $c_t$ is defined as a weighted sum of a non-decreasing function of the luminance difference $\delta L_t$ and of a luminance stabilization coefficient $w_{stab}$ representative of the stabilization of luminance evaluations over a plurality of consecutive previous views.

Preferably, the tone mapping parameter $c_t$ is defined as a non-decreasing function of the luminance difference $\delta L_t$ weighted by a motion speed coefficient $w_{speed}$.

This tone mapping parameter $c_t$ can also be defined as a weighted sum of a non-decreasing function of the luminance difference $\delta L_t$, this sum being itself weighted by the motion speed coefficient $w_{speed}$.

Preferably, the tone mapping function $f(Y_t, c_t)$ is defined such that $Y'_t = Y_t^{c_t}$.

A subject of the invention is also an image processing unit comprising at least one processor configured to implement the above image processing method.

A subject of the invention is also head-mounted device comprising this image processing unit, a virtual image provider configured to deliver a sequence of VR images to this image processing unit, and an imager configured to display processed current views $v'_t$ as processed by the image processing unit. Such a head mounted device may include a smartphone, preferably configured to display a VR content, and preferably configured to be head mounted.

A subject of the invention is also a non-transitory storage medium carrying instructions of program code for executing the image processing method above, when said program is executed on a computing device.

## 4. Brief description of the drawings

The invention can be better understood with reference to the following description and drawings, given by way of example and not limiting the scope of protection, and in which:

- Fig.1 discloses a main embodiment of processing a current view $v_t$ extracted from a current VR image $I_t$ following a previous view $v_{t-1}$ into a processed view $v'_t$;

- Fig. 2 discloses the orientation and position of a current view $v_t$, a previous view $v_{t-1}$, and of a following view $v_{t+1}$ of the surface of a sphere of a VR image, respectively at a time $t-1$, $t$, and $t+1$, as a part extracted from this VR image, with their respective luminance evaluation measures;

- Fig. 3 illustrates a first variant of a tone mapping parameter function, where "luminance change" corresponds to luminance difference $\delta L_t$.

- Fig. 4 illustrates a second variant of a tone mapping parameter function, where "luminance change" corresponds to luminance difference $\delta L_t$.

## 5. Description of embodiments

While example embodiments are capable of various modifications and alternative forms, embodiments thereof are described below in details by way of examples. It should be understood, however, that there is no intent to limit example embodiments to the particular forms disclosed, but on the contrary, example embodiments are to cover all modifications, equivalents, and alternatives falling within the scope of the claims.

Although the description and drawings describe the different steps of the method as sequential, many of the steps may be performed in parallel, concurrently or simultaneously. In addition, the order of operations may be re-arranged. The processes may be terminated when their operations, including iterations, are completed, but may also have additional steps not included in the description.

The different steps of the method discussed below, with their variants, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks. Specific structural and functional details disclosed herein are merely representative for purposes of describing example embodiments of the present invention. This invention may, however, be embodied in many alternate forms and should not be construed as limited to only the embodiments set forth herein.

A main embodiment of the invention will now be described in the context of displaying a sequence of VR images with a head-mounted display device (or HMD) worn by a viewer who can change his orientation within the virtual 360° environment of each VR image of the sequence such as to select a specific view of this VR image. The head-mounted display device comprises:

- An imager to image views to be viewed by the viewer;
- An **image processing unit** having at least one processor configured in a manner known per se to implement at least the image processing method embodied below;
- A VR image provider configured to deliver VR images in sequence to the image processing unit; this VR image provider can be for instance a VR video memory or a VR video receptor; this video receptor may receive - for instance by WiFi connection - VR images from an emitter included, for instance, in a gateway.
- Orientation sensors configured in a manner known per se to determine the orientation of the viewer's head within a current VR image (which is here a virtual 360° environment) and to deliver this orientation to the image processing unit. This orientation is generally represented by spherical coordinates $\phi, \lambda,$ i.e. a latitude angle $\phi$ and a longitude angle $\lambda$, defining the orientation of the viewer's head within the VR image.

Here, VR images are spread over 360°. VR images spread over smaller angles may be considered too.

Each view $v$ displayed by the imager and viewed by the viewer at a time $t$ is a portion of a full 360° current VR image, centered at a viewpoint of eyes of the viewer on this current VR image.

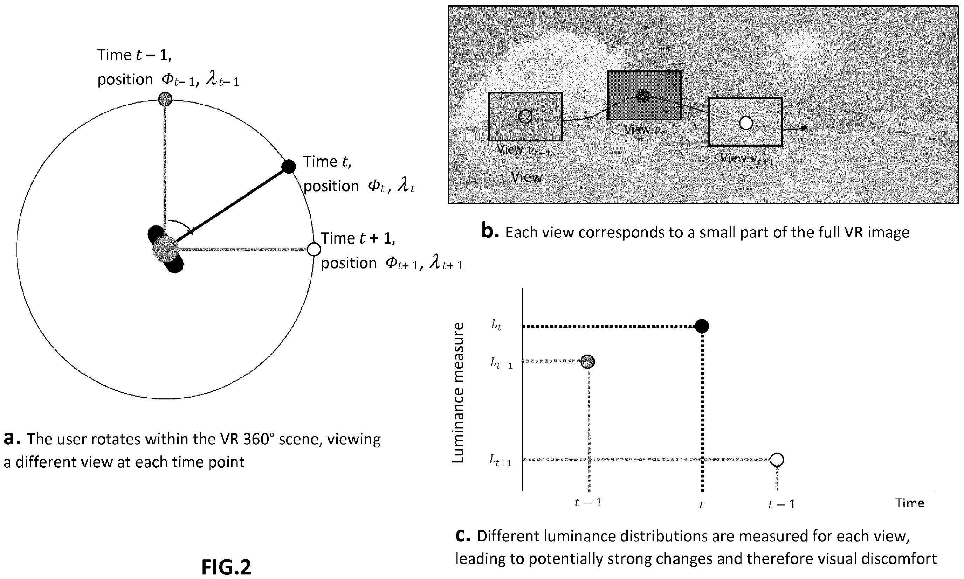

As shown on figure 2:

- The current view $v_t$ is centered within a current VR image $I_t$ at spherical coordinates $\phi_t, \lambda_t$ and is displayed at time $t$;
- The previous view $v_{t-1}$ is centered within a VR image $I_{t-1}$ at spherical coordinates $\phi_{t-1}, \lambda_{t-1}$ and is displayed at time $t$-1.
- The following view $v_{t+1}$ is centered within a VR image $I_{t+1}$ at spherical coordinates $\phi_{t+1}, \lambda_{t+1}$ and is displayed at time $t$+1.

The VR image $I_{t-1}$ and VR image $I_{t+1}$ may be different from the current VR image $I_t$ or identical to this current VR image $I_t$. The VR image $I_t$ could notably be identical to the previous VR image $I_{t-1}$ if, for example, the content does not change between time $t$-1 and time $t$. (i.e. static content). The view $v_t$ could notably be identical to the previous view $v_{t-1}$ if, for example, the content does not change AND the viewer does not move his head between time $t$-1 and time $t$.

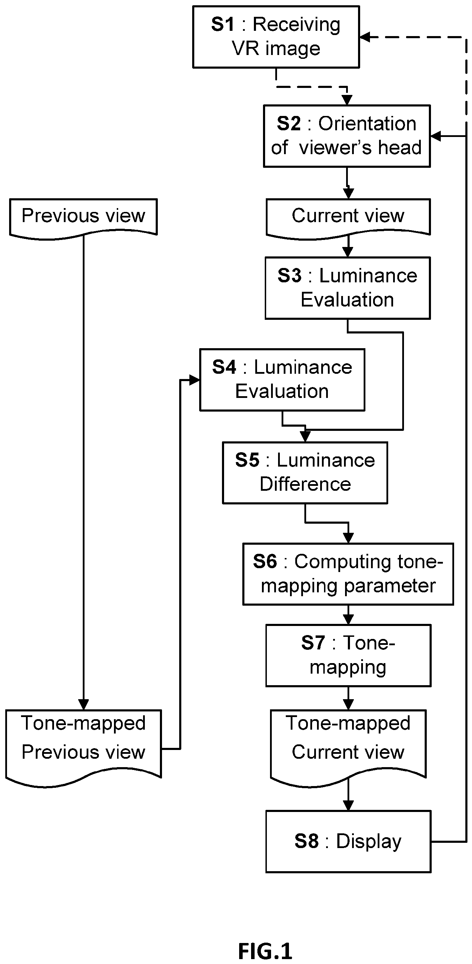

A main embodiment of the processing of a current view $v_t$ extracted from a current VR image $I_t$ following a previous view $v_{t-1}$ extracted from the same current VR image $I_t$ or from a previous current VR image $I_{t-1}$ will now be described in reference to the flowchart of figure 1. Preferably, at least each time a view needs to be refreshed on the imager, the below steps S1 to S8 or S2 to S8 are implemented. A view needs notably to be refreshed when a change of orientation of the viewer's head is detected by the orientation sensors and/or when a new VR image is provided to the image processing unit.

In a first optional **step S1** of the image processing method, a new current VR image $I_t$ is received by the image processing unit from the VR image provider. If no new VR image $I_t$ is available in the timing sequence of VR images, then the process skips directly to the second **step S2.**

In a second **step S2** of the image processing method, orientation of the viewer's head within the current VR image $I_t$ is received by the image processing unit from the orientation sensors. This orientation is represented by spherical coordinates $\phi_t, \lambda_t$. A current view $v_t$ is extracted in a manner known per se from the current VR image $I_t$ based on the position of a viewpoint of the viewer on this current VR image $I_t$. This position is generally determined by the intersection of the received orientation with the current VR image $I_t$. For such an extraction, known projection formulas for projecting between equirectangular format and gnomonic format are generally used.

When VR images are spherical images, views are preferably extracted as gnomonic or rectilinear views. As known from prior art, gnomonic or rectilinear refers to the projection used to extract a (smaller) view from a spherical VR image. It refers to the projection used to project the spherical surface of the image to a plane tangent to this spherical surface.

In a third **step S3,** a luminance evaluation $L_t$ of this extracted current view $v_t$ is computed from colors of pixels of this extracted current view $v_t$.

This evaluation is notably based on the luminance $Y_t(i)$ of different pixels $i$ of this current view $v_t$. Luminance $Y_t(i)$ of a pixel $i$ is computed for instance as a weighted combination of the color components representing the color of this pixel $i$ in the color space of the HMD, such as to perform a color space conversion from this color space to, for instance, the Yuv color space. Luminance values of these pixels are preferably normalized in the interval [0, 1]. As a whole, this luminance evaluation $L_t$ is then computed from colors of pixels of the current view $v_t$.

In a first variant, the luminance evaluation $L_t$ of the extracted current view $v_t$ is computed as the average luminance over all pixels of the current view $v_t$. This average luminance can be computed as:

$$L_t = \frac{\sum_{i=1}^{N} Y_t(i)}{N} \qquad (1)$$

where N is the number of pixels in the view $v_t$.

In order to save computing resources, in a second variant, this luminance evaluation $L_t$ is computed in lower resolution versions of the view $v_t$, such that all pixels of the full resolution version are not considered for this evaluation, but only a lower number of pixels homogeneously distributed over the whole view $v_t$.

The first and second variants above may not be considered as a good evaluation of how bright the brightest features of the view $v_t$ are since a view with very bright and very dark areas may lead to the same average luminance as a view with just midtones. It should be keep in mind that the bright parts in the first case would influence the comfort of the viewer even though the average luminance remains the same.

When dealing with HDR images/views, it often occurs that their luminance distribution exhibits a long tail, covering only a small number of pixels but ones that have very high values. If these pixels are considered in calculations of luminance evaluation of a view, they often bias the results. Therefore, in a third variant, luminance values used for computing the average does not include a given percentile of pixels having the highest luminance values. Preferably, this given percentile is above zero but inferior or equal to 5%. This could be done to avoid the luminance evaluation of a view being overly biased by small highlights/specularities. The idea behind that would be that, if there is a small specularity present, it may be preferred not to compress the whole view just to avoid having a very small bright part. On the opposite, if however there is a significant number of bright pixels in the image, i.e. because there are large bright areas in the view, even by ignoring the top luminance given percentile to compute the average luminance, high luminance values will still be captured in the average. In this third variant, only a nth percentile inferior to 100% of the luminance distribution of the current view $v_t$ is considered to compute the average luminance representing a luminance evaluation of this view. For example, if nth = 95th, the average luminance $L_t$ would be set to a luminance value such that 95% of the image pixels have lower luminance. This approach would lead to a more accurate representation of what happens at the brighter part of the view, while being relatively robust against very small highlights areas in the view.

The computing of luminance evaluation $L_t$ of the extracted current view $v_t$ is not limited to the above methods and other luminance evaluation $L_t$ computing methods could be used instead.

When luminance values of pixels are normalized in the interval [0, 1], luminance evaluations are also in the same range [0, 1].

Similarly, in a fourth **step S4,** a luminance evaluation $L'_{t-1}$ of a processed version $v'_{t-1}$ of the previous view $v_{t-1}$ is similarly computed from luminance values of pixels of this processed previous view $v'_{t-1}$. This computing of the luminance evaluation $L'_{t-1}$ is performed using the same method as in step S3. The processed version $v'_{t-1}$ of the previous view $v_{t-1}$ is obtained, generally in a step S6 and S7 (see below) of a previous iteration of the method, by applying the tone mapping function $f(Y_{t-1},c_{t-1})$ of step S6 and S7 to luminance values $Y_{t-1}$ of pixels of the previous view $v_{t-1}$.

In a fifth **step S5,** a luminance difference $\delta L_t$ is computed from a difference between the luminance evaluation $L_t$ of the current view $v_t$ and the luminance evaluation $L'_{t-1}$ of the processed previous view $v'_{t-1}$. Preferably, this computing is performed according to:

$$\delta L_t = L_t - L'_{t-1} \qquad (2)$$

When luminance evaluations $L_t$ and $L'_{t-1}$ are normalized in the range [0, 1], the range of values of the luminance change $\delta L_t$ is then in the range [-1, 1].

In a sixth **step S6,** a tone mapping parameter $c_t$ is computed in function of the luminance difference $\delta L_t$ computed at step S5, such as to parametrize a tone mapping function $f(Y_t,c_t)$ to be applied (see step S7 below) to the luminance $Y_t$ of a pixel $i$ of the current view $v_t$ to get a tone mapped luminance $Y'_t$ of the corresponding pixel such as to build a tone mapped current view $v'_t$. In this embodiment, the expression "tone mapping" may concern a luminance compression or a luminance expansion. It means that "tone-mapping" includes "inverse-tone-mapping".

Preferably, the tone mapping parameter $c_t$ is defined as a non-decreasing function of the luminance difference $\delta L_t$. Preferably, this non-decreasing function is a monotonically increasing function, having then a first derivative over the luminance difference $\delta L_t$ which is continuous and positive or null over its range.

The tone mapping function $f(Y_t, c_t)$ may be an exponential tone mapping function such that $Y'_t = Y_t^{c_t}$. Any other known parametrized tone mapping function can be used instead.

Several examples of definition of tone mapping parameters $c_t$ will be given below in the specific context of an exponential tone mapping function $Y'_t = Y_t^{c_t}$.

In a **first variant,** the tone mapping parameter $c_t$ is defined as follows as a **piecewise linear function** of the luminance difference $\delta L_t$:

$$c_t = \begin{cases} 1, & \delta L_t \leq 0 \\ \delta L_t(c_{max} - 1) + 1, & \delta L_t > 0 \end{cases} \qquad (3)$$

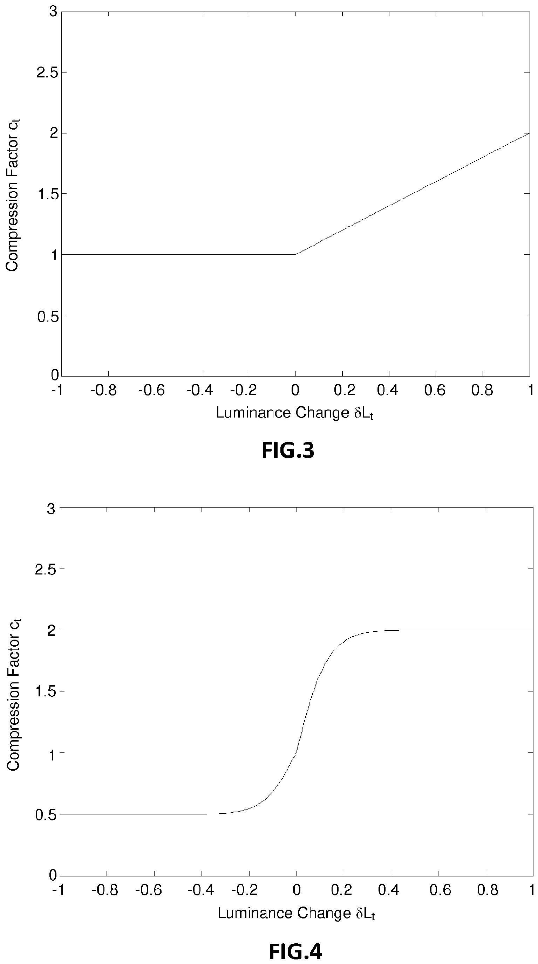

where the parameter $c_{max}$ defines the strongest allowed compression factor desired, which can be for instance set to a value higher than 1, e.g. $c_{max} = 2$. Higher values for $c_{max}$ will lead to a more aggressive compression of luminance. The tone mapping parameter function defining $c_t$ in this variant is illustrated on figure 3 for different values of luminance change $\delta L_t$.

In a **second variant,** the tone mapping parameter $c_t$ is defined as follows as a **sigmoid function** of the luminance difference $\delta L_t$:

$$c_t = \begin{cases} 0.5 + \frac{1-a_{min}}{2} + \frac{a_{min}}{1-e^{b_{min}\delta L_t}}, & \delta L_t \leq 0 \\ 0.5 + \frac{1-a_{max}}{2} + \frac{a_{max}}{1-e^{b_{max}\delta L_t}}, & \delta L_t > 0 \end{cases} \qquad (4)$$

where $a_{max} = 2 \times (c_{max-1})$ and $a_{min} = 2 \times (c_{min-1})$ are parameters controlling the maximum and minimum allowed luminance compression/expansion. In this variant, a separate parameter is preferred for defining separately the maximum allowed compression and the maximum expansion of luminance. In this situation, the sigmoid function is not symmetric, but rather consists of two connected half-sigmoid functions;

where parameters $b_{min}$ and $b_{max}$ control the slope of each half-sigmoid function. A value of -15 for both of these parameters was found to give satisfactory results but could be set to different values for different VR HMDs or depending on the preferences of the user.

The tone mapping parameter function defining $c_t$ in this variant is illustrated on figure 4 for different values of luminance change $\delta L_t$.

In both variants above, the tone mapping parameter $c_t$ is actually a non-decreasing function of the luminance difference $\delta L_t$.

In a **third variant,** the tone mapping parameter $c_t$ is defined as a weighted sum of a non-decreasing function of the luminance difference $\delta L_t$ and of a luminance stabilization coefficient $w_{stab}$ representative of the stabilization of luminance evaluations - as computed above - over a plurality $\kappa$ of consecutive previous views including the previous view $v_{t-1}$. The non-decreasing function of the luminance difference $\delta L_t$ is for instance computed according to the first or second variant above (respectively equation 3 and 4).

Preferably, this tone mapping parameter $c_t$ is then computed according to:

$$c_t = \left(1 - w_{stab}\right) c'_t + w_{stab} \qquad (5)$$

where $c'_t$ corresponds to $c_t$ in equations 3 or 4, with values of $w_{stab}$ normalized in the interval [0,1].

For instance, the luminance stabilization coefficient $w_{stab}$ is computed according to:

$$w_{stab} = \begin{cases} 0, & \text{if } \kappa < n_{views} \\ \frac{\kappa - n_{views}}{n_{views}}, & \text{if } n_{views} \geq \kappa > 2n_{views} \\ 1, & \text{otherwise} \end{cases} \qquad (6)$$

where $n_{views}$ represents the number of consecutive views at which it is considered that luminance evaluations are fully stabilized (=> $w_{stab}$ = 1) if they have not changed above a luminance difference threshold $\tau_{\delta L}$ ; $n_{views}$ can be set to a small value, e.g. 3;

where $\kappa$ is a count of consecutive views, including the previous view $v_{t-1}$, over which luminance evaluations have not changed above the luminance difference threshold $\tau_{\delta L}$.

This count $\kappa$ is implemented in a manner known per se for instance for an incrementation when change of luminance evaluations between two consecutive views is not above the luminance difference threshold $\tau_{\delta L}$ or for a reset to 0 when change of luminance evaluations between two consecutive views is above the luminance difference threshold $\tau_{\delta L}$.

Advantageously, this third variant of computing a tone mapping parameter $c_t$ allows to get a tone mapped current view $v'_t$ which is lower tone-mapped (and possibly non tone-mapped at all) when the luminance evaluation stabilizes over consecutive views. Advantageously, this third variant allows to progressively reduce the compression or expansion applied to consecutive views during the stabilization of luminance evaluation up to finally keep the original current view (i.e. up to apply in step S7 a tone mapping function $f(Y_t, c_t)$ equal to 1) when the luminance evaluation is fully stabilized. This may be desirable especially for content that has been color graded or prepared with a particular artistic intent. In such cases, tone-mapping becomes a tradeoff between ensuring visual comfort and preserving the original artistic intent.

In a **fourth variant,** the tone mapping parameter $c_t$ is defined as a non-decreasing function of the luminance difference $\delta L_t$ weighted by a motion speed coefficient $w_{speed} > 0$. The non-decreasing function of the luminance difference $\delta L_t$ is for instance computed according to any of the first to third variants above (respectively equation 3, 4 and 5).

Preferably, this tone mapping parameter $c_t$ is then computed according to:

$$c_t = \left(1 + \frac{\min(s_t, s_{max})}{s_{max}} * w_{speed}\right) * c'_t \quad (7)$$

where $c'_t$ corresponds to $c_t$ in equations 3, 4 or 5,

where $s_t$ represents the distance travelled on the VR sphere between the current view $v_t$ and the previous view $v_{t-1}$,

where $s_{max}$ represents a maximum distance travelled on the VR sphere between two successive views; $s_{max}$ can be defined by the HMD device manufacturer.

where $w_{speed} > 0$, preferably $0 < w_{speed} \leq 0.5$.

This fourth variant of computing a tone mapping parameter $c_t$ allows to get a tone mapped current view $v'_t$ which is more tone-mapped when the transition from the previous view $v_{t-1}$ to the current view $v_t$ results from a quick movement of the viewer's head than when this transition results from a traveling of the VR image by moving slowly the viewer's head. If the viewer moves fast, the intermediate views that pass while the viewer's head is in motion are not viewed in detail by the viewer and will be more tone mapped because the tone mapping parameter $c_t$ will be higher. In contrast, if the viewer moves slowly, the intermediate views that pass while the viewer's head is in motion are likely to be observed in more detail and will be less tone mapped because the tone mapping parameter $c_t$ will be lower. In the first case, since the intermediate views are not the focus of the viewer, a stronger tone mapping could be applied, better ensuring viewing comfort and avoiding rapid changes in luminance. In the second case, the tone mapping should likely remain more conservative to ensure that the artistic intent of each view is better preserved, even if visual comfort is sacrificed somewhat.

In a seventh **step S7,** the current view $v_t$ is processed into a processed current view $v'_t$ by applying to luminance values $Y_t$ of pixels of this current view $v_t$ the tone mapping function $f(Y_t, c_t)$ parametrized with the value of the tone mapping parameter $c_t$ computed at the previous step S6; therefore, luminance values $Y'_t$ of pixels of this processed current view $v'_t$ are such that : $Y'_t = f(Y_t, c_t)$ (5).

Preferably, the tone mapping function $f(Y_t, c_t)$ is defined as a non-decreasing function of the luminance $Y_t$ and of the tone mapping parameter $c_t$. Preferably, this non-decreasing function is a monotonically increasing function, having then a first derivative over the luminance $Y_t$ and over the tone mapping parameter $c_t$ which is continuous and positive or null over its range.

Preferably, the variation of the tone mapping parameter $c_t$ in function of the luminance difference $\delta L_t$ and the definition of the tone mapping function $f(Y_t, c_t)$ are preferably set according to the following requirements:

If $\delta L_t > 0$, i.e. when the luminance evaluation $L_t$ of the current view $v_t$ has increased relative to the luminance evaluation $L'_{t-1}$ of the processed previous view $v'_{t-1}$, the current view $v_t$ is processed into a processed current view $v'_t$ having a luminance evaluation $L'_t$ inferior to the luminance evaluation $L_t$ of said current view $v_t$;

If $\delta L_t \leq 0$, i.e. when the luminance evaluation $L_t$ of the current view $v_t$ has decreased or not changed relative to the luminance evaluation $L'_{t-1}$ of the processed previous view $v'_{t-1}$, the current view $v_t$ is not changed and $v'_t = v_t$.

Preferably, the tone-mapping function is exponential according to: $Y'_t = Y_t^{c_t}$ (6).

In the first variant above of step S6, when the luminance decreases and generates a negative luminance difference (i.e. $\delta L_t \leq 0$), no mapping of luminance is performed (i.e. $c_t = 1$). In the second variant above of step S6, luminance values of pixels of the current view are expanded (i.e. $c_t = 0.5 + \frac{1-a_{min}}{2} + \frac{a_{min}}{1-e^{b_{min}\delta L_t}}$, ) if luminance evaluation has decreased relative to the previous view (i.e. $\delta L_t \leq 0$). This second variant would still prevent large changes in luminance between consecutive views but would advantageously keep the overall luminance levels of the content higher.

In an eighth **step S8,** the processed current view $v'_t$ is sent in a manner known per se to the imager in order to display it. Before sending it, when required by the imager, colors of this processed current view $v'_t$ are converted back from the Yuv color space into the RGB color space of the HMD. This color space conversion is inverse of the color space conversion performed at step S3 above.

Then, each time a view needs to be refreshed on the imager, the above steps S1 to S8 or S2 to S8 are implemented. A view needs notably to be refreshed when a change of orientation of the viewer's head is detected by the orientation sensors and/or when a new VR image is provided to the image processing unit.

According to the above method, in the viewing path of the viewer in a VR scene, the luminance of each current view is tone mapped depending on the luminance of previous view(s) and optionally on the movement speed of the viewer's head within the VR scene. Each view displayed to the viewer is then tone-mapped at a level which is a non-decreasing function of a luminance difference between this current view and a previous one. Thank to this processing of consecutive views, blinding and eye strain of viewer's eyes are avoided without losing the "wow" effect that can be obtained by a HDR HMD.

Although some embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

## Claims

1. A method for processing a current view $v_t$ extracted from a current Virtual Reality (VR) image $I_t$ following at least one previous view $v_{t-1}$ extracted from the same current VR image $I_t$ or from a previous VR image $I_{t-1}$, comprising:

   - tone mapping (S7) the current view $v_t$ into a processed current view $v'_t$ at a level which is a non-decreasing function of a luminance difference $\delta L_t$ between said current view $v_t$ and said at least one previous view $v_{t-1}$,

   wherein said tone mapping may be a compression or an expansion of luminance.

2. The method for processing according to claim 1, wherein:

   If said luminance difference $\delta L_t > 0$, said tone mapping is performed such that said processed current view $v'_t$ has a luminance evaluation $L'_t$ inferior to the luminance evaluation $L_t$ of said current view $v_t$;
   If said luminance difference $\delta L_t \leq 0$, said tone mapping is performed such that said processed current view $v'_t$ is equal to said current view $v_t$.

3. The method for processing according to claim 2, wherein each of said luminance evaluations is computed for its view as an average of luminance values of colors of pixels of this view.

4. The method for processing according to claim 3, wherein said luminance values used for computing said average does not include a given percentile of pixels of said view having the highest luminance values.

5. The method for processing according to any one of claims 1 to 4:

> wherein said tone mapping (S7) is performed by applying to luminance values $Y_t$ of pixels of this current view $v_t$ a tone mapping function $f(Y_t,c_t)$ parametrized with a tone mapping parameter $c_t$, which is a non-decreasing function of said luminance value $Y_t$ and of said tone mapping parameter $c_t$;
> wherein said tone mapping parameter $c_t$ is a non-decreasing function of said luminance difference $\delta L_t$.

6. The method for processing according to claim 5 when depending on claims 3 or 4, further comprising computing (S5) said luminance difference $\delta L_t$ from a difference between said luminance evaluation $L_t$ of the current view $v_t$ and said luminance evaluation(s) $L'_{t-1}$ of a processed version (s) $v'_{t-1}$ of the at least one previous view $v_{t-1}$, wherein each processed version $v'_{t-1}$ of a previous view $v_{t-1}$ is obtained by applying said tone mapping function $f(Y_{t-1},c_{t-1})$ to luminance values $Y_{t-1}$ of pixels of this previous view $v_{t-1}$.

7. The method for processing according to claim 5 or 6, wherein the tone mapping parameter $c_t$ is defined as a weighted sum of a non-decreasing function of the luminance difference $\delta L_t$ and of a luminance stabilization coefficient $w_{stab}$ representative of the stabilization of luminance evaluations over a plurality of consecutive previous views.

8. The method for processing according to any one of claims 5 to 7, wherein the tone mapping parameter $c_t$ is defined as a non-decreasing function of the luminance difference $\delta L_t$ weighted by a motion speed coefficient $w_{speed}$.

9. The method for processing according to any one of claims 5 to 8, wherein the tone mapping function $f(Y_t,c_t)$ is defined such that $Y'_t = Y_t^{c_t}$ .

10. An Image processing unit comprising at least one processor configured to implement the method according to any one of claims 1 to 9.

11. A Head-mounted device comprising the image processing unit of claim 10, a virtual image provider configured to deliver a sequence of VR images to said image processing unit, and an imager configured to display processed current view $v'_t$ as processed by said image processing unit.

12. A non-transitory storage medium carrying instructions of program code for executing the image processing method of any one of claims 1 to 9, when said program is executed on a computing device.

**S1** : Receiving VR image

**S2** : Orientation of viewer's head

Current view

**S3** : Luminance Evaluation

Previous view

**S4** : Luminance Evaluation

**S5** : Luminance Difference

**S6** : Computing tone-mapping parameter

**S7** : Tone-mapping

Tone-mapped Previous view

Tone-mapped Current view

**S8** : Display

**FIG.1**

Time $t-1$,
position $\Phi_{t-1}, \lambda_{t-1}$

Time $t$,
position $\Phi_t, \lambda_t$

Time $t+1$,
position $\Phi_{t+1}, \lambda_{t+1}$

**a.** The user rotates within the VR 360° scene, viewing
a different view at each time point

**FIG.2**

**b.** Each view corresponds to a small part of the full VR image

View $v_t$

View $v_{t-1}$

View $v_{t+1}$

View

Luminance measure

$L_t$

$L_{t-1}$

$L_{t+1}$

$t-1$     $t$     $t-1$     Time

**c.** Different luminance distributions are measured for each view,
leading to potentially strong changes and therefore visual discomfort

EP 3 486 865 A1

**FIG.3**

**FIG.4**

Europäisches
Patentamt

European
Patent Office

Office européen
des brevets

**EUROPEAN SEARCH REPORT**

Application Number

EP 17 30 6603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAI ZICONG ET AL: "Visually Favorable Tone-Mapping With High Compression Performance in Bit-Depth Scalable Video Coding", IEEE TRANSACTIONS ON MULTIMEDIA, IEEE SERVICE CENTER, PISCATAWAY, NJ, US, vol. 15, no. 7, 1 November 2013 (2013-11-01), pages 1503-1518, XP011529386, ISSN: 1520-9210, DOI: 10.1109/TMM.2013.2266633 [retrieved on 2013-10-11] * abstract * * page 1505, paragraph III * * page 1507, paragraph IV.E - page 1508 * | 1-6, 10-12 | INV. G06T5/00 |
| X | WO 2015/096955 A1 (THOMSON LICENSING [FR]) 2 July 2015 (2015-07-02) * page 2, line 30 - page 3, line 17 * * page 10, line 21 - page 11, line 27 * * page 16, line 24 - page 17, line 7 * | 1,10-12 | |
| X | EP 3 139 345 A1 (DISNEY ENTPR INC [US]; ETH ZÜRICH [CH]) 8 March 2017 (2017-03-08) * paragraphs [0009] - [0013], [0018] - [0027] * | 1,10-12 | TECHNICAL FIELDS SEARCHED (IPC) G06T |

-/--

The present search report has been drawn up for all claims

| Place of search | Date of completion of the search | Examiner |
|---|---|---|
| Munich | 3 May 2018 | Zamuner, Umberto |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt
European
Patent Office
Office européen
des brevets

**EUROPEAN SEARCH REPORT**

Application Number

EP 17 30 6603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | G. EILERTSEN ET AL: "A comparative review of tone-mapping algorithms for high dynamic range video", COMPUTER GRAPHICS FORUM, vol. 36, no. 2, 1 May 2017 (2017-05-01), pages 565-592, XP055442404, GB ISSN: 0167-7055, DOI: 10.1111/cgf.13148 * page 569, paragraph 3.2 - page 570 * * page 571, paragraph 4.1 - page 572 * * page 572, paragraph 5 - page 574, paragraph 5.4 * * page 575, left-hand column, line 16 - right-hand column, line 11 * | 1-12 | |
| A | Joel Kronander ET AL: "Photorealistic rendering of mixed reality scenes", Computer Graphics Forum, 1 May 2015 (2015-05-01), pages 643-665, XP055468820, Oxford DOI: 10.1111/cgf.12591 Retrieved from the Internet: URL:https://onlinelibrary.wiley.com/doi/epdf/10.1111/cgf.12591 * page 645, paragraph 4.1 - page 647, paragraph 4.2 * | 1-12 | TECHNICAL FIELDS SEARCHED (IPC) |

The present search report has been drawn up for all claims

| Place of search | Date of completion of the search | Examiner |
|---|---|---|
| Munich | 3 May 2018 | Zamuner, Umberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 6603

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2018

| Patent document cited in search report | | Publication date | Patent family member(s) | | Publication date |
|---|---|---|---|---|---|
| WO 2015096955 | A1 | 02-07-2015 | CN | 105850114 A | 10-08-2016 |
| | | | EP | 3087730 A1 | 02-11-2016 |
| | | | JP | 2017502602 A | 19-01-2017 |
| | | | KR | 20160102524 A | 30-08-2016 |
| | | | US | 2016328830 A1 | 10-11-2016 |
| | | | WO | 2015096955 A1 | 02-07-2015 |
| EP 3139345 | A1 | 08-03-2017 | CN | 106504278 A | 15-03-2017 |
| | | | EP | 3139345 A1 | 08-03-2017 |
| | | | JP | 2017049992 A | 09-03-2017 |
| | | | US | 2017070719 A1 | 09-03-2017 |

EPO FORM P0459

For more details about this annex : see Official Journal of the European Patent Office, No. 12/82